# EUROPÄISCHE PATENTANMELDUNG

(11) **EP 1 519 099 A1**
(43) Veröffentlichungstag der Anmeldung: **30.03.2005**
(21) Anmeldenummer: 04018071.3
(22) Anmeldetag: 30.07.2004
(51) Int. Cl.: F16L 55/033, F16L 55/027

(54) **Strömungskreis mit Geräuschdämpfung**

(30) Priorität: 23.09.2003 DE 10343999
(71) Anmelder: ROBERT BOSCH GMBH, 70442 Stuttgart (DE)
(72) Erfinder: Wu, Datong, 75181 Pforzheim (DE); Dertenkötter, Jens, 73230 Kirchheim/Teck (DE)

(57) **Zusammenfassung**

Die Erfindung betrifft einen Strömungskreis mit einem Strömungskanal (11) in dem eine Verengung (12) durch einen Durchflussmengenregler (20) ausgebildet ist, der mit einem Ventilgehäuse (10) innerhalb des Strömungskanals (11) montiert ist, wobei sich in Strömungsrichtung hinter der Verengung (12) in Folge der dort auftretenden hohen Strömungsgeschwindigkeiten ein Bereich mit erhöhter Kavitation und / oder Turbulenzen ausgebildet. In Strömungsrichtung vor und / oder hinter dem Durchflussmengenregler (20) ist mindestens ein Geräuschdämpfungselement (30) innerhalb des Strömungskanals (11) angeordnet ist. Weiterhin ist vorgesehen, dass dem Durchflussmengenregler (20) ein Vordruckminderer oder ein Hinterdruckerhöher zugeordnet ist, der in Strömungsrichtung vor oder hinter dem Durchflussmengenregler (20) angeordnet ist, und dass der Vordruckminderer oder Hinterdruckerhöher als Zentrifugator ausgebildet ist, der die transversale Strömung in eine im wesentlichen rotierende Strömung umlenkt.

## Beschreibung

### Stand der Technik

Die Erfindung betrifft einen Strömungskreis nach dem Oberbegriff der unabhängigen Ansprüche.

Mengenregler bzw. Mengenregelventile mit einem Durchflussmengenregler werden in hydraulischen und pneumatischen Systemen zur Regulierung der Durchflussmengen eingesetzt. Dabei wird im Allgemeinen im Bereich des Mengenreglers der strömungsführende Leitungsquerschnitt verjüngt.

In diesem Bereich ist die Strömungsgeschwindigkeit bei gleichzeitiger Abnahme des statischen Druckes erhöht. Bei Flüssigkeiten, zum Beispiel bei Wasser, können bei ausreichend starker Abnahme des Druckes unter den Dampfdruck der Flüssigkeit kurzzeitig Dampfblasen entstehen, welche anschließend implodieren, was als Kavitation bezeichnet wird. In dem Bereich nach der Verjüngung treten aufgrund der Querschnittsvergrößerung starke Turbulenzen mit Geschwindigkeitsvektoren senkrecht zur eigentlichen Fließrichtung auf. Kavitation und insbesondere der hohe Gradient der Strömungsgeschwindigkeiten sind Ursache und Quelle für zum Teil erhebliche Geräuschentwicklungen. Dabei steigt das Geräuschniveau bei hohen Druckdifferenzen vor und nach dem Mengenregler sowie bei großen Querschnittsverengungen stark an. Bei hydraulischen und pneumatischen Systemen sind daher insbesondere die Mengenregel bzw. Mengenregelventile Ursache für die Mengenregler werden insbesondere im Brauchwasserbereich von Heizthermen eingesetzt. Sie dienen dazu, die durch das System fließende Wassermenge unabhängig vom Wasserdruck weitestgehend konstant zu halten. Als besonders kleine und kostengünstige Wassermengenregler haben sich Mengenregelventile, die nach dem bekannten Prinzip eines O-Ring-Reglers arbeiten, bewährt.

Bei hohen Druckdifferenzen zwischen den Bereichen vor und nach dem Mengenregelventil kommt es bei O-Ring-Reglern zu lauten Zischgeräuschen. Diese werden vom Wasser und von der Leitungswandung auf das angeschlossene Leitungssystem übertragen. Die Schallemission kann dabei so groß sein, dass O-Ring-Regler nicht in Systemen, die im Wohnbereich installiert sind, eingesetzt werden können.

Es ist Aufgabe der Erfindung, einen Strömungskreis zu schaffen, bei welchem die Strömungsgeräusche effektiv unterdrückt sind.

### Vorteile der Erfindung

Die Aufgabe wird mit den kennzeichnenden Maßnahmen des Anspruchs 1 gelöst. Das Geräuschdämpfungselement verhindert, dass Schallwellen auf die übliche Rohrwandung übertragen werden und sich so im angeschlossenen Leitungssystem ausbreiten. Zusätzlich wird verhindert, dass Schallwellen an der Rohrwandung reflektiert werden und sich so ungehindert in der Flüssigkeit ausbreiten.

In einer bevorzugten Ausführungsform ist das Geräuschdämpfungselement als Auskleidung der Innenwand des Ventilgehäuses aus geräuschdämpfenden Material ausgebildet, die sich in Strömungsrichtung an den Durchflussmengenregler anschließt und sich vorwiegend über den Bereich der erhöhten Kavitation und / oder Turbulenzen erstreckt. Dieser Bereich stellt aufgrund der dort auftretenden Kavitation und der besonders starken Strömungsgradienten die Hauptquelle für die Geräuschentwicklung dar. Durch die Auskleidung werden die Schallwellen in unmittelbarer Nähe des Entstehungsortes absorbiert und die Reflektion verringert.

Die Schallausbreitung entgegengesetzt der Strömungsrichtung wird dadurch unterbunden, dass sich ein Geräuschdämpfungselement als Auskleidung der Innenwand des Ventilgehäuses aus geräuschdämpfenden Material ausgebildet ist, das in Strömungsrichtung vor dem Mengenregler angeordnet ist.

Die Übertragung der Schwingungen auf das Ventilgehäuse und somit auf das anschließende Leitungssystem wird besonders wirksam unterbunden, indem das Geräuschdämpfungselement den Durchflussmengenregler umlaufend zur Innenwand des Ventilgehäuses umschließt, wobei der Mengenregler in einem Absatz des Geräuschdämpfungselementes gehalten und in Strömungsrichtung von einem in einer Nut des Geräuschdämpfungselementes gelagerten Ring abgestützt ist.

Aus Gründen der Montagevereinfachung kann es vorgesehen sein, dass das Geräuschdämpfungselement zweiteilig ausgeführt ist, wobei an den zu den Stirnseiten des Ventilgehäuses korrespondierenden Enden des Geräuschdämpfungselementes jeweils ein Flansch ausgebildet ist. Diese als Hülsen ausgebildeten Geräuschdämpfungselemente lassen sich von beiden Seiten in das Ventilgehäuse einschieben. Dabei dienen die Flansche zum einen als zusätzliche Dichtungselemente und verhindern weiterhin die Schallübertragung vom Ventilgehäuse auf das angeschlossene Rohrleitungssystem.

Eine alternative Ausgestaltung der Erfindung sieht vor, dass in Strömungsrichtung hinter dem Durchflussmengenregler ein im wesentlichen kegelförmiges Geräuschdämpfungselement angeordnet ist, das mit seiner Spitze entgegengesetzt der Strömungsrichtung ausgerichtet ist und dass in Verbindung mit einem korrespondierenden Flansch des Geräuschdämpfungselementes eine Strömungsumlenkung ausgebildet ist. Durch diese Anordnung wird die Schallausbreitung in Strömungsrichtung weitgehend verhindert. Die Kegelfläche absorbiert die Schallwellen beziehungsweise reflektiert und streut diese derart, dass sie weitestgehend von dem als Wandauskleidung vorgesehenen Geräuschdämpfungselement absorbiert werden.

Eine besonders gute Schallunterdrückung lässt sich erreichen, indem die Geräuschdämpfungselemente aus Schall absorbierenden Materialien, vorzugsweise aus Polyurethan, Silikon oder Kautschuk hergestellt sind. Mit diesen Materialien lassen sich die Geräuschdämpfungselemente als Formteile oder als Beschichtungen der Innenwandung des Ventilgehäuses kostengünstig herstellen. Aus dem niedrigen Elastizitätsmodul dieser Materialien resultiert eine besonders gute Schallabsorption.

Eine weitere Lösung der Aufgabe wird mit den kennzeichnenden Maßnahmen des Anspruchs 9 erreicht. Diese Geräuschdämpfungsmaßnahme sieht vor, dass dem Durchflussmengenregler bzw. dem Mengenregelventil ein Vordruckminderer oder ein Hinterdruckerhöher zugeordnet ist, der in Strömungsrichtung vor oder hinter dem Durchflussmengenregler angeordnet ist, wobei der Vordruckminderer als Zentrifugator ausgebildet ist, der die transversale Strömung in eine im wesentlichen rotierende Strömung umlenkt. Durch den Vordruckminderer wird der Eingangsdruck für den Durchflussmengenregler reduziert. Dadurch ergibt sich über den Durchflussmengenregler ein geringerer Druckabfall, was zu einer Reduzierung der Geräuschentwicklung im Mengenregler bzw. Mengenregelventil führt. Das Prinzip des Zentrifugators bewirkt, dass bei kleinen Strömungsgeschwindigkeiten der Druckabfall über dem Vordruckminderer klein ist und bei hohen Strömungsgeschwindigkeiten stark ansteigt.

Ein besonders schmutzunempfindliches Bauteil ohne bewegliche Teile ergibt sich, wenn der Vordruckminderer oder der Hinterdruckerhöher ein Gehäuse und ein darin zentrisch angeordneten Verdrängungskörper mit einem Gewinde aufweist, wobei zwischen dem Verdrängungskörper und der Innenwand des Gehäuses ein spiralförmiger Kanal zur Strömungsführung ausgebildet ist und wobei das Gewinde des Verdrängungskörpers am in Strömungsrichtung hinteren Ende einen Abschlussflansch aufweist, vor dem Öffnungen vorgesehen sind, die den Kanal mit einer Austrittsöffnung verbinden. Der so ausgeführte Vordruckminderer zeichnet sich durch eine lange Lebensdauer und somit durch geringe Wartungskosten aus.

Eine denkbare Erfindungsvariante sieht vor, dass das Gewinde des Verdrängungskörpers im Vordruckminderer eine in Strömungsrichtung stetig abnehmende Steigung aufweist. Dadurch kann die Abhängigkeit zwischen Druckabfall und Strömungsgeschwindigkeit am Vordruckminderer weiter angepasst und optimiert werden.

In Verbindung mit dem Durchflussmengenregler bzw. dem Mengenregelventil, welcher bzw. welches die oben beschriebenen Geräuschdämpfungselemente aufweist, wird in Kombination mit dem zuvor beschriebenen Vordruckminderer eine sehr effektive Geräuschminimierung erreicht.

Zweckmäßig ist es insofern, dass vor dem Durchflussmengenregler bzw. dem Mengenregelventil der Flüssigkeitsdruck reduziert wird, indem in einem Vordruckminderer, der als Zentrifugator ausgebildet ist, eine transversale Strömung in eine im wesentlichen rotierende Strömung umgelenkt wird. Durch die Rotationsbewegung der Strömung wird der Vordruck für das Mengenregelventil am Vordruckminderer abhängig von der Strömungsgeschwindigkeit und damit vom Mengendurchfluss überproportional stark reduziert. Dadurch werden Geräuschentwicklungen am Mengenregelventil entsprechend reduziert.

### Zeichnung

Die Erfindung wird im folgenden anhand eines in den Figuren dargestellten Ausführungsbeispiels näher erläutert.

Es zeigen:
Figur 1 eine schematische Darstellung eines Ventils mit den dabei auftretenden Strömungsverhältnissen;
Figur 2 ein Mengenregelventil mit Geräuschdämpfungselementen in der Schnittansicht;
Figur 3 eine weitere Variante eines Mengenregelventils mit Geräuschdämpfungselementen in der Schnittansicht;
Figur 4 schematisch eine Flussmengenregeleinrichtung mit einem Mengenregelventil und einem vorgeschalteten Vordruckminderer
Figur 5 einen Vordruckminderer, als Zentrifugator ausgeführt, in der Längsschnittund in der Querschnittansicht

### Beschreibung der Ausführungsbeispiele

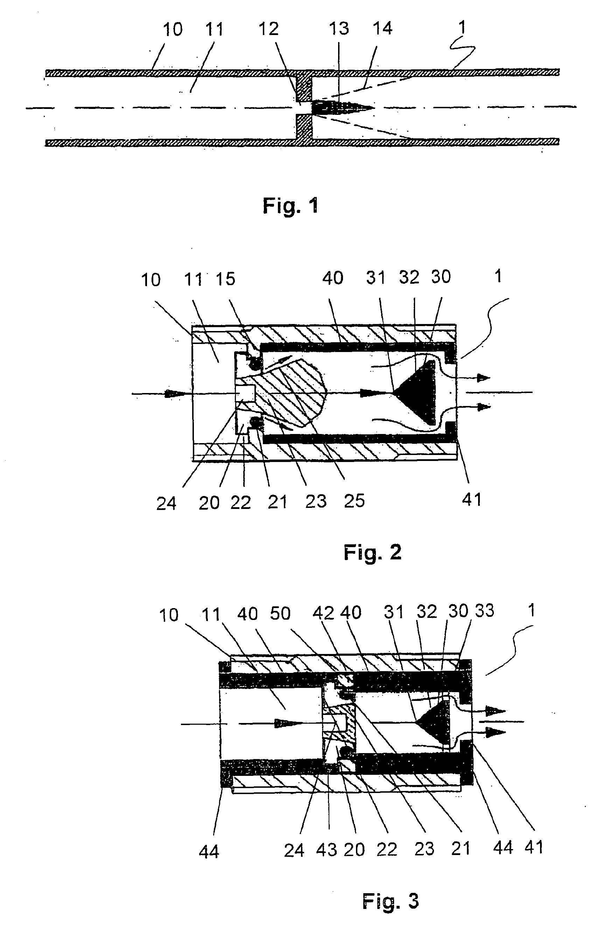

Figur 1 zeigt schematisch die Strömungsverhältnisse in einem Strömungskreis mit einem Strömungskanal 11, in dem ein Verengung 12 in einem Ventilgehäuse 10 ausgebildet ist. In Strömungsrichtung ist die Strömungsgeschwindigkeit vor der Verengung 12 relativ klein. Direkt in der Verengung und in Strömungsrichtung danach bildet sich ein Bereich hoher Strömungsgeschwindigkeit 13 aus. Dadurch nimmt der Druck in diesem Bereich stark ab. In Flüssigkeiten, wie beispielsweise Wasser, können Dampfblasen auftreten, sobald der Dampfdruck der Flüssigkeit größer als der umgebende Druck ist. Durch anschließendes Implodieren kommt es zu einer Kavitation. Geräusche, hervorgerufen durch starke Turbulenzen infolge von Quervermischungen, entstehen insbesondere im Bereich starker Strömungsgeschwindigkeitsgradienten 14. Untersuchungen belegen, dass sich die Zone mit extrem hoher Schallemission in etwa über einen Bereich erstreckt, der dem 4- bis 5-fachen des Querschnitts der Verengung 12 entspricht.

Figur 2 zeigt einen Mengenregler bzw. ein Mengenregelventil 1 im Längsschnitt, welches erfindungsgemäß Geräuschdämpfungselemente 30, 40 aufweist.

Das Mengenregelventil 1 besteht im gezeigten Beispiel aus einem rohrförmigen Ventilgehäuse 10, welches im Inneren im, in Strömungsrichtung vorderen Bereich einen Flansch 15 aufweist, an dem ein Durchflussmengenregler, beispielsweise ein O-Ring-Regler 20 gehalten ist. Der O-Ring-Regler 20 besitzt eine Halterung 22, die sich gegen den Flansch 15 des Ventilgehäuses 10 abstützt. Die als Käfig ausgeführte Halterung 22 nimmt einen O-Ring 21 auf. Die Halterung 22 besitzt im Bereich der Mittelachse eine Befestigung 24 für eine Strömungsführung 23, die den Querschnitt in Strömungsrichtung verkleinert. Dabei besitzt die Strömungsführung 23 im Bereich des O-Ringes 21 umlaufend an ihrer Oberfläche nicht in der Figur dargestellte, im wesentlichen parallel zur Strömungsrichtung verlaufende Ausnehmungen. Wird der O-Ring-Regler 20 von einer Flüssigkeit durchströmt, verändert sich, abhängig von der Strömungsgeschwindigkeit, der Durchströmungsquerschnitt zwischen O-Ring 21 und Strömungsführung 23, indem der O-Ring 21 in die Ausnehmungen der Strömungsführung 23 gepresst wird. Dadurch wird eine Linearisierung des Druckabfalls in Abhängigkeit der Strömungsgeschwindigkeit und damit von der Durchflussmenge erreicht.

Das Geräuschdämpfungselement 40 ist als Auskleidung der Innenwand des Ventilgehäuses 10 ausgebildet und erstreckt sich im gezeigten Beispiel in Strömungsrichtung ab dem O-Ring-Regler 20 bis zum Ende des Ventilgehäuses 10, mindestens jedoch über den gesamten Bereich erhöhter Kavitation und / oder Turbulenzen. Das Geräuschdämpfungselement 40 besteht aus einem Schall absorbierenden, elastischen Material, beispielsweise aus Polyurethan, Silikon oder Natur- oder Kunst-Kautschuk, und kann als Einsatz in Form einer Hülse oder als Beschichtung der Innenwand des Ventilgehäuses ausgeführt sein. Dadurch werden Geräusche, die infolge von implodierenden Dampfblasen und / oder Turbulenzen entstehen, größtenteils gedämpft.

Im gezeigten Ausführungsbeispiel weist das Mengenregelventil 1 ein zusätzliches, im wesentlichem kegelförmiges Geräuschdämpfungselement 30 auf, welches eine Spitze 31 und eine Kegelfläche 32 aufweist. Das Geräuschdämpfungselement 30 ist in Strömungsrichtung hinter dem O-Ring-Regler 20 angeordnet. Seine Spitze 31 weist dabei entgegengesetzt zur Strömungsrichtung. Zusammen mit einem dazu korrespondierenden Flansch 41, der am Geräuschdämpfungselement 40 ausgebildet sein kann, wird zusätzlich eine Strömungsumlenkung ausgebildet, die die Schallausbreitung in Strömungsrichtung weitgehend verhindert. Die Kegelfläche 32 reflektiert bzw. streut Schallwellen derart, dass diese weitgehend vom Geräuschdämpfungselement 40 absorbiert werden. Als Materialien für das Geräuschdämpfungselement 30 kommen ebenfalls die bereits oben genannten Schall absorbierenden Materialien in Frage.

Wie im Ausführungsbeispiel gezeigt, kann eine Schallentstehung auch bereits direkt am O-Ring-Regler 20 minimiert werden, wenn die Strömungsführung 23 "keulen-förmig" mit einer Umströmungsfläche 25 in Strömungsrichtung verlängert ausgebildet ist, die eine starke Quervermischung, hervorgerufen durch eine plötzliche Querschnittsvergrößerung verhindert.

Zusätzlich kann das als Wandauskleidung ausgebildete Geräuschdämpfungselement 40 in Strömungsrichtung vor dem O-Ring-Regler 20 angeordnet sein und verhindert so die Schallausbreitung entgegengesetzt zur Strömungsrichtung.

Figur 3 zeigt ein weiteres Ausführungsbeispiel für ein Mengenregelventil 1 mit den Geräuschdämpfungselementen 30, 40, bei dem das als Wandauskleidung ausgelegte Geräuschdämpfungselement 40 den O-Ring-Regler 20 umlaufend zur Innenwand des Ventilgehäuses 10 umschließt. Dabei ist der O-Ring-Regler 20 zwischen einem Absatz 43 und einem in einer Nut 42 des Geräuschdämpfungselementes 40 gelagerten Ring 50, beispielsweise aus Metall, Kunststoff oder Keramik, gehalten.

Vorzugsweise ist dabei das Geräuschdämpfungselement 40 zweiteilig ausgeführt und besitzt an den zu den Enden des Ventilgehäuses 10 korrespondierenden Enden Flansche 44. Diese als Hülsen ausgebildeten Geräuschdämpfungselemente 40 lassen sich von beiden Seiten in das Ventilgehäuse 10 einschieben, was die Montage des O-Ring-Reglers 20 erleichtert und können zusätzliche Dichtungsfunktionen gegenüber den Anschlusselementen zum Mengenregelventil 1 übernehmen.

Dieses Ausführungsbeispiel weist, wie in Figur 2 bereits beschrieben, ein weiteres kegelförmiges Geräuschdämpfungselement 30 auf, das im Inneren des Ventilgehäuses 10 mittels Stegen 33 gehalten wird.

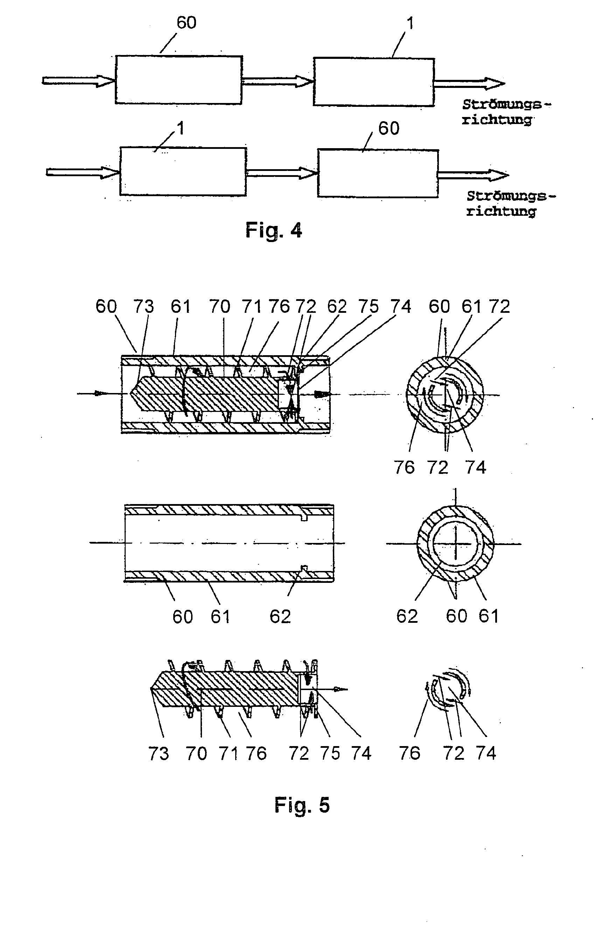

Figur 4 zeigt schematisch eine Flüssigkeitsregeleinrichtung, bei der dem Mengenregelventil 1 ein Vordruckminderer 60 vorgeschaltet ist, der den Druck derart mindert, dass Schallemissionen infolge großer Druckunterschiede im Mengenregelventil 1 weitgehend vermieden werden.

In Figur 5 ist ein Vordruckminderer 60 gezeigt, der als Zentrifugator ausgebildet ist. Der Zentrifugator besteht aus einem Gehäuse 61 und einem darin zentrisch angeordneten, schraubenförmigen Verdrängungskörper 70 und ist in Figur 5 im montierten Zustand (in der Figur oben) und als Einzelteile (in der Figur Mitte und unten) jeweils im Längsschnitt (links) und im Querschnitt (rechts) dargestellt.

Der Verdrängungskörper 70 besitzt eine Spitze 73, die entgegen zur Strömungsrichtung angeordnet ist und von der Flüssigkeit umströmt wird und ein Gewinde 71, welches mit der Innenwand des Gehäuses 61 einen spiralförmigen Kanal 76 zur Strömungsführung ausbildet. Am hinteren Ende weist der Verdrängungskörper 70 einen Abschlussflansch 75 auf, der sich gegen einen dazu korrespondierenden Flansch 62 des Gehäuses 61 abstützt. Vor dem Abschlussflansch 75 sind Öffnungen 72 vorgesehen, die den spiralförmigen Kanal 76 mit einer Austrittsöffnung 74 am hinteren Ende des Verdrängungskörpers 70 verbinden, so dass die Flüssigkeit tangential ausströmen kann.

Durch diese Anordnung wird erreicht, dass der Vordruck des Mengenregelventils 1 reduziert wird. Das Verfahren beruht auf der Zentrifugalkraft, die mit zunehmender Strömungsgeschwindigkeit schnell ansteigt. Durch das Umlenken der transversalen Strömung in eine Rotationsbewegung wird ein von der Strömungsgeschwindigkeit abhängiger Druckverlust erreicht. Bei kleineren Strömungsgeschwindigkeiten kann die Flüssigkeit dabei fast ohne Druckverluste den Zentrifugator passieren. Mit zunehmender Strömungsgeschwindigkeit wird die zunächst transversale Bewegungsenergie in eine Rotationsenergie umgewandelt. Das Verhältnis der Höhe zur Breite des Kanals 76 bestimmen dabei den Effekt der Druckminderung. Das Gewinde 71 kann dabei eine in Strömungsrichtung stetig abnehmende Steigung aufweisen, wodurch sich die Rotationsbewegung der Flüssigkeit stetig erhöht.

Durch oben genannte schalldämpfende Maßnahmen wird erreicht, dass Strömungsgeräusche an Mengenregelventilen 1, insbesondere im Bereich der Brauchwassererwärmung, effektiv unterdrückt werden. Durch eine zusätzliche Vordruckminderung in Form eines Zentrifugators kann darüber hinaus eine noch stärkere Geräuschdämpfung erzielt werden, ohne dass sich die Schmutzempfindlichkeit des Bauteils erhöht.

## Patentansprüche

1. Strömungskreis mit einem Strömungskanal (11), in dem eine Verengung (12) durch einen Durchflussmengenregler (20) ausgebildet ist, der mit einem Ventilgehäuse (10) innerhalb des Strömungskanals (11) montiert ist, wobei sich in Strömungsrichtung hinter der Verengung (12) in Folge der dort auftretenden hohen Strömungsgeschwindigkeiten ein Bereich mit erhöhter Kavitation und / oder Turbulenzen ausgebildet, **dadurch gekennzeichnet, dass** in Strömungsrichtung vor und / oder hinter dem Durchflussmengenregler (20) mindestens ein Geräuschdämpfungselement (30, 40) innerhalb des Strömungskanals (11) angeordnet ist.

2. Strömungskreis nach Anspruch 1, **dadurch gekennzeichnet, dass** das Geräuschdämpfungselement (40) als Auskleidung der Innenwand des Ventilgehäuses (10) aus geräuschdämpfenden Material ausgebildet ist.

3. Strömungskreis nach Anspruch 2, **dadurch gekennzeichnet, dass** sich die Auskleidung in Strömungsrichtung an den Durchflussmengenregler (20) anschließt und sich vorwiegend über den Bereich der erhöhten Kavitation und / oder Turbulenzen erstreckt.

4. Strömungskreis nach Anspruch 2, **dadurch gekennzeichnet, dass** die Auskleidung in Strömungsrichtung vor dem Durchflussmengenregler (20) angeordnet ist.

5. Strömungskreis nach mindestens einem der Ansprüche 1 bis 4, **dadurch gekennzeichnet, dass** das Geräuschdämpfungselement (40) den Durchflussmengenregler (20) umlaufend zur Innenwand des Ventilgehäuses (10) umschließt, wobei der Durchflussmengenregler (20) in einem Absatz (43) des Geräuschdämpfungselementes (40) gehalten und in Strömungsrichtung von einem in einer Nut (42) des Geräuschdämpfungselementes (40) gelagerten Ring (50) abgestützt ist.

6. Strömungskreis nach Anspruch 5, **dadurch gekennzeichnet, dass** das Geräuschdämpfungselement (40) zweiteilig ausgeführt ist, wobei an den zu den Stirnseiten des Ventilgehäuses (10) korrespondierenden Enden des Geräuschdämpfungselementes (40) jeweils ein Flansch (44) ausgebildet ist.

7. Strömungskreis nach Anspruch 1, **dadurch gekennzeichnet, dass** in Strömungsrichtung hinter dem Durchflussmengenregler (20) ein im wesentlichen kegelförmiges Geräuschdämpfungselement (30) angeordnet ist, das mit seiner Spitze (32) entgegengesetzt der Strömungsrichtung ausgerichtet ist, und dass in Verbindung mit einem korrespondierenden Flansch (41) des Geräuschdämpfungselementes (40) eine Strömungsumlenkung ausgebildet ist.

8. Strömungskreis nach einem der vorhergehenden Ansprüche, **dadurch gekennzeichnet, dass** dem Durchflussmengenregler (20) ein Vordruckminderer oder ein Hinterdruckerhöher (60) zugeordnet ist, der in Strömungsrichtung vor oder hinter dem Durchflussmengenregler (20) angeordnet ist, und dass der Vordruckminderer oder Hinterdruckerhöher (60) als Zentrifugator ausgebildet ist, der die transversale Strömung in eine im wesentlichen rotierende Strömung umlenkt.

9. Strömungskreis mit einem Strömungskanal (11), in dem ein Durchflussmengenregler (20) angeordnet ist, mit dem der freie Querschnitt des Strömungskanals (11) strömungsabhängig veränderbar oder fest einstellbar ist, **dadurch gekennzeichnet, dass** dem Durchflussmengenregler (20) ein Vordruckminderer oder ein Hinterdruckerhöher (60) zugeordnet ist, der in Strömungsrichtung vor oder hinter dem Durchflussmengenregler (20) angeordnet ist, und dass der Vordruckminderer oder Hinterdruckerhöher (60) als Zentrifugator ausgebildet ist, der die transversale Strömung in eine im wesentlichen rotierende Strömung umlenkt.

10. Strömungskreis nach Anspruch 9, **dadurch gekennzeichnet, dass** der Vordruckminderer oder Hinterdruckerhöher (60) ein Gehäuse (61) und einen darin zentrisch angeordneten Verdrängungskörper (70) mit einem Gewinde (71) aufweist, wobei zwischen dem Verdrängungskörper (70) und der Innenwand des Gehäuses (61) ein spiralförmiger Kanal (76) zur Strömungsführung ausgebildet ist und wobei das Gewinde (71) des Verdrängungskörpers (70) am in Strömungsrichtung hinteren Ende einen Abschlussflansch (75) aufweist, vor dem Öffnungen (72) vorgesehen sind, die den Kanal (76) mit einer Austrittsöffnung (74) verbinden.

11. Strömungskreis nach Anspruch 10, **dadurch gekennzeichnet, dass** das Gewinde (71) des Verdrängungskörpers (70) im Vordruckminderer oder Hinterdruckerhöher (60) eine in Strömungsrichtung stetig abnehmende Steigung aufweist.
